# NEUE EUROPÄISCHE PATENTSCHRIFT

(11) **EP 2 812 723 B2**
(45) Veröffentlichungstag und Bekanntmachung des Hinweises auf die Entscheidung über den Einspruch: **24.08.2022**
(45) Hinweis auf die Patenterteilung: 21.08.2019
(21) Anmeldenummer: 13701107.8
(22) Anmeldetag: 25.01.2013
(51) Int. Cl.: G01S 15/931, B60R 19/48, G01S 7/521

(54) **ANORDNUNG AN EINEM BAUTEIL EINES KRAFTFAHRZEUGES**
ARRANGEMENT ON A COMPONENT OF A MOTOR VEHICLE
ENSEMBLE SUR UN ÉLÉMENT STRUCTURAL D'UN VÉHICULE AUTOMOBILE

(30) Priorität: 11.02.2012 DE 102012002760
(43) Veröffentlichungstag der Anmeldung: 17.12.2014
(73) Patentinhaber: Volkswagen Aktiengesellschaft, 38440 Wolfsburg (DE)
(72) Erfinder: BAUMANN, Peter, 38114 Braunschweig (DE); DRAEGER, Thilo, 38518 Gifhorn (DE); LAMBERT, Georg, 38442 Wolfsburg (DE); SCHMÜLLING, Ralf, 38518 Gifhorn (DE)
(74) Vertreter: Patentanwälte Bressel und Partner mbB
(86) Internationale Anmeldenummer: PCT/EP2013/051414
(87) Internationale Veröffentlichungsnummer: WO 2013/117442

(56) Entgegenhaltungen:
- EP-A1- 2 407 802
- EP-A2- 1 710 785
- WO-A1-2009/144545
- WO-A1-2012/034864
- WO-A1-2012/034864
- WO-A1-2013/117442
- JP-A- 2005 130 040
- KR-A- 20090 113 980
- US-A1- 2012 000 302

## Beschreibung

Die Erfindung betrifft eine Anordnung an einem Bauteil eines Kraftfahrzeuges, bestehend aus einem Sensor mit einer im wesentlichen ebenen Stirnfläche, einem den Sensor umschließenden Dichtungsring und einem Trägerelement zur Abstandshaltung des Sensors in axialer Richtung relativ zum Bauteil, wobei der Sensor sich mit dem Dichtungsring derart in eine Aussparung des Bauteils erstreckt, dass die Stirnfläche des Sensors mit einer Außenseite des Bauteils im Wesentlichen eine Ebene bildet.

Es ist bekannt, in der Außenhaut von Fahrzeugen Sensoren anzuordnen. Mit solchen Sensoren wird die Umgebung detektiert und Objekte oder Hindernisse erkannt. Beispielsweise können solche Sensoren Ultraschallsensoren sein, die für Einparkassistenzsysteme verwendet werden.

Solche Sensoren werden von dem Bauteil oder der Struktur, in der sie eingebaut sind akustisch durch ein Entkopplungsteil entkoppelt, damit auftretende Schwingungen von dem Sensor nicht auf das Bauteil und vom Bauteil nicht auf den Sensor übertragen werden. Zusätzlich sollte zwischen dem Sensor und dem Bauteil eine Dichtung vorgesehen sein, um das Eintreten von Flüssigkeit, normalerweise Wasser, in die Aussparung des Bauteils zu verhindern. In den meisten Fällen haben diese Sensoren einen kreisförmigen Querschnitt und die Entkopplungs- bzw. Dichtungsteile einen ringförmigen Querschnitt. Bekannte Lösungen verwenden zur Erreichung beider Ziele einen sogenannten Entkopplungsring.

Ultraschallsensoren senden dabei Ultraschallsignale aus, die von einem im Sendebereich befindlichen Objekt oder Hindernis reflektiert werden und von dem gleichen oder von weiteren Ultraschallwandlern empfangen werden, Aus diesem Grund ist es wichtig, dass die Membran auf der Stirnfläche des Sensors frei schwingen kann. Daher wird ein ringförmiges Entkopplungsteil eingesetzt, um die Membran akustisch von der Einbauumgebung, dem Bauteil, zu isolieren. Im Fall einer unerwünschten akustischen Kopplung zwischen Sensor und Bauteil erfüllt der Sensor seine Funktion nicht mehr korrekt und der eingekoppelte Schall kann die Membran wieder anregen oder nach hinten in das Bauteil abgestrahlt werden. Eine solche Situation kann C:\Users\AV01JWY\Desktop\K 18733 WO-EP\K 18733 WOEP 2015-01-07 K 18733 EP geänderte Anmeldeunterlagen für Erwide 13169182.DOC auftreten wenn eingedrungenes Wasser gefriert und eine akustische Brücke bildet. Das kann dazu führen, dass empfangene Schwingungen fälschlicherweise erkannt werden.

Aus der der DE 100 39 060 A1 ist eine Anordnung mit einem Entkopplungsring und einem Dichtungsring mit einem konischen axialen Querschnitt bekannt. Dabei ist es nachteilig, dass Toleranzen zwischen dem Durchmesser der Aussparung in dem Bauteil und dem Dichtungsring auftreten können. Eine Folge von diesen Querschnittsunterschieden zwischen der Aussparung im Bauteil und dem Dichtungsring ist, dass Wasser zwischen dem Dichtungsring und der Aussparung eindringen kann. Dies kann insbesondere in Fahrzeugwaschanlagen auftreten.

Es sind zudem Entkopplungsringe bekannt, die eine umlaufende Wulst aufweisen. Bei diesen Entkopplungsringen kann es, wie oben beschrieben, dazu kommen, dass unter Druck eintretendes Wasser nicht schnell genug ablaufen und bei tiefen Temperaturen gefrieren kann und damit die Wirkung des Entkopplungsrings verringern kann, da es durch das feste Eis zu einer akustischen Verbindung zwischen Sensor und Bauteil kommen kann, wodurch unerwünschte Schwingungen zwischen dem Sensor dem Bauteil übertragen werden.

Wenn der Dichtungsring mit umlaufender Wulst mit Druckwasser beaufschlagt wird, kann das auftreffende Wasser zwischen Bauteil und Dichtungsring eindringen. Verbleibendes Wasser kann schnell einfrieren und dazu zu einer Einkopplung des ausgesendeten Schalls in die Einbauumgebung, zum Beispiel dem Stoßfänger des Fahrzeugs führen. Dadurch wird der Sensor gestört und es kann zu der Erkennung von Scheinhindernissen kommen.

Aus der WO 2009/144545 A1 ist eine Anordnung an einem Bauteil eines Kraftfahrzeugs bekannt, bestehend aus einem Sensor mit einer im Wesentlichen ebenen Stirnfläche, einem den Sensor umschließenden Dichtungsring und einem Trägerelement zur Abstandshaltung des Sensors in axialer Richtung relativ zum Bauteil, wobei der Sensor mit dem Dichtungsring sich derart in eine Aussparung des Bauteils erstreckt, dass die Stirnfläche des Sensors und eine Außenseite des Bauteils im Wesentlichen eine Ebene bilden. Dabei ist der Sensor vorzugsweise ein Ultraschallsensor. Zur Beeinflussung des Abstrahlwinkels des Ultraschallsensors weist die Oberfläche des Dichtungsringes an mindestens einer Stelle eine streifenförmige Einbuchtung auf, sodass in diesem Bereich die Oberfläche des Dichtungsringes im Verhältnis zur Oberfläche des Sensors zurückgesetzt ist.

Es ist eine Aufgabe der Erfindung, eine Anordnung zu schaffen, die eine stabile akustische Entkopplung von Bauteil und Sensor gewährleistet und ein Abfließen von eingedrungenem Wasser ermöglicht.

Die Aufgabe wird durch eine Anordnung gemäß Patentanspruch 1 gelöst. Vorteilhafte Aus- und Weiterbildungen sind in den Unteransprüchen dargestellt.

Eine erfindungsgemäße Anordnung umfasst ein Bauteil, beispielweise einen Stoßfänger eines Kraftfahrzeuges, und einen Sensor, welcher in einer Aussparung des Bauteils angeordnet ist, wobei die Stirnfläche des Sensors mit dem Bauteil im Wesentlichen eine Ebene bildet. Der an dem Bauteil angeordnete Sensor ist insbesondere ein Ultraschallsensor und Teil eines Fahrerassistenzsystems eines Kraftfahrzeuges.

In der erfindungsgemässen Anordnung umfasst der Sensor einen Dichtungsring, welcher sich ebenfalls in die Aussparung des Bauteils erstreckt. Der Dichtungsring dient insbesondere zur Abdichtung des Sensors gegenüber dem Bauteil. Eine zusätzliche Aufgabe des Dichtungsrings ist die mechanische bzw. akustische Entkopplung des Sensors vom Bauteil.

Gemäß der Erfindung weist der den Sensor umgebende Dichtring ein in radialer Richtung weiter außenliegendes zusätzliches Ringelement auf, welches mindestens zwei über den Umfang verteilte Aussparungen aufweist. Dabei ist das Ringelement derart ausgebildet, dass über die Aussparungen eindringendes Wasser ablaufen kann. Mehrere Aussparungen sind denkbar. Mit anderen Worten besteht das außenliegende Ringelement aus mehreren ringförmig angeordneten Teilstücken. Die Stirnfläche des außenliegenden Ringelementes liegt an der Innenseite bzw. -fläche des Bauteils an. Weiter ist das aussenliegende Ringelement über Stege an seiner Innenseite mit dem Dichtungsring verbunden. Gemäß einer vorteilhaften Ausbildung der Erfindung ist der Dichtring und das außenliegende Ringelement einstückig ausgebildet.

Vorzugsweise bildet der Dichtungsring mit dem außenliegenden Ringelement einen hohlzylinderförmigen Teilbereich, wobei in Umlaufrichtung am außenliegenden Ringelement zusätzlich zu den Stegen, Lamellen und/oder Noppen angeordnet sind. Weiterhin können beispielweise die Lamellen in Form rechteckiger Rippen ausgebildet sein, deren Längsseite in radialer Richtung des Hohlzylinders verläuft. Es kann auch ein umlaufender, innenliegender Kranz von Noppen bzw. im Querschnitt kreisrunder Säulen ausgebildet sein.

Die erfindungsgemäßen Stege und/oder Lamellen und/oder Noppen dienen dazu, das außenliegende Ringelement in einer festen Position zu halten und damit die Abdichtung zwischen Sensor und Bauteil zu gewährleisten.

In einer bevorzugten Ausbildung der Erfindung ist der Dichtungsring gleichzeitig als Entkopplungsring ausgebildet.

Der Dichtungsring und/oder das Ringelement besteht vorzugsweise aus einem Polymer, bevorzugt einem Silikon.

Das erfindungsgemäße Ringelement von Dichtungs- bzw. Entkopplungsring dient zur Abdichtung gegenüber von außen eindringendem Wasser und zu einer richtigen Selbstpositionierung des Sensors in der Aussparung des Bauteils. Die erfindungsgemäßen Aussparungen im außenliegenden Ringelement erlauben, eingetretenes Wasser ablaufen zu lassen.

Das Ringelement ist elastisch ausgeführt, um Toleranzen in axialer Richtung zwischen dem Sensor, dem Bauteil, und dem Trägerelement auszugleichen. Die Toleranzen können zum Beispiel durch Ungleichmäßigkeiten in den Verbindungen zwischen dem Trägerelement und dem Bauteil oder durch Toleranzen im Trägerelement selbst verursacht werden.

Ein weiterer Vorteil von der erfindungsgemäßen Ausführung des Dichtrings ist, dass der Materialverbrauch und das Gewicht gering gehalten werden können.

Weitere Merkmale ergeben sich aus den Ansprüchen, den Figuren und der Figurenbeschreibung.

Anhand von Ausführungsbeispielen wird die Erfindung näher erläutert. Es zeigen:
- Fig. 1:: eine perspektivische Ansicht einer möglichen Ausführung des Dichtungsrings,
- Fig. 2:: eine Ansicht in axialer Richtung einer möglichen Ausführung des erfindungsgemäßen Dichtungsrings.
- Fig. 3:: eine schematische Schnittdarstellung durch die erfindungsgemäße Anordnung, in einer Aussparung des Bauteiles mit einem Trägerelement, einem Sensor und dem erfindungsgemäßen Dichtungsring wobei das außenliegende Ringelement mit den am Ringelement angeordneten Stegen zu sehen ist,
- Fig. 4:: eine weitere schematische Schnittdarstellung durch die erfindungsgemäße Anordnung, wobei der Schnitt durch die Aussparungen des außenliegenden Ringelements verläuft.

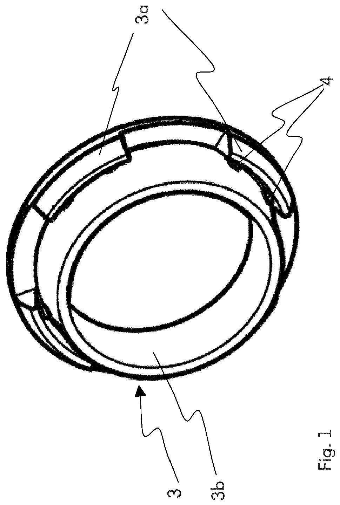

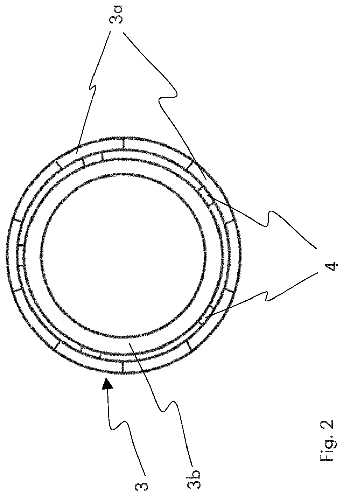

Der Dichtungsring 3, der zusätzlich auch als Entkopplungsring dient, ist in Fig. 1 und Fig. 2 gezeigt. Er besteht aus einem hohlzylinderförmigen Körper 3b mit einem außenliegenden und beabstandeten Ringelement 3a. Dieses außenliegende Ringelement 3a aufweist mehrere auf seinem Umfang verteilte Aussparungen auf. Das außenliegende Ringelement weist außerdem an seiner Innenseite stabilisierende Lamellen, Noppen und/oder Stege auf, die gegebenenfalls auch mit dem hohlzylindrischen Körper 3b des Dichtungsrings verbunden sein können. Im Ausführungsbeispiel der Fig. 1 besteht das außenliegende Ringelement 3a aus vier auf dem Umfang verteilten Teilabschnitten, die jeweils zwei Stege 4 zur Stabilisierung aufweisen. Das Ausführungsbeispiel in Fig. 2 zeigt ein Ringelement 3b mit fünf angeordneten Teilabschnitten mit je einem Steg je Teilabschnitt.

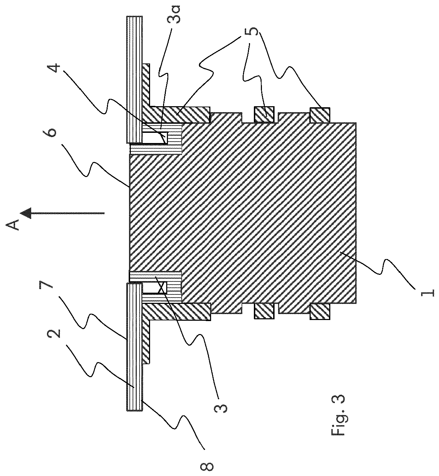

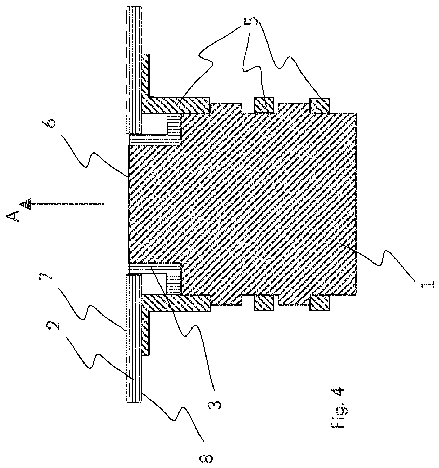

Das Bauteil 2 der Fig. 3 und 4 verläuft parallel zu einer Ebene, welche senkrecht auf der axialen Richtung A steht. Die axiale Richtung A stimmt mit der Rotationsachse eines im Wesentlichen rotationssymmetrisch ausgebildeten Sensors 1 überein. Der Sensor 1 umfasst insbesondere einen Membrantopf der die Stirnfläche 6 anschließt. Der Sensor 1 erstreckt sich bereichsweise so in der Aussparung des Bauteils 2, dass seine Stirnfläche 6 im Wesentlichen mit der Außenseite 7 des Bauteils 2 eine Ebene bildet.

Der Sensor 1 ist gegenüber eindringendem Wasser abzudichten und gegenüber dem Bauteil 2 hinsichtlich möglicher Schwingungsübertragung zu entkoppeln. Hierfür ist er von dem ebenfalls rotationssymmetrisch um die Richtung A ausgebildeten Dichtungsring 3 umgeben. Wie bereits zu Fig. 1 beschrieben, weist der Dichtungsring 3 ein beabstandetes außenliegendes Ringelement 3a mit Aussparungen auf. Die Stirnseite des außenliegenden Ringelements 3a des Dichtungsrings 3 kommt gegenüber der Innenseite 8 des Bauteils 2 zu liegen.

Der Dichtungsring 3 ist aus Silikon einstückig mit einem außenliegenden Ringelement 3a ausgebildet und ist zumindest teilweise elastisch.

Das außenliegende Ringelement 3a kann im Querschnitt im Wesentlichen rechteckförmig oder dreieckförmig ausgebildet sein.

Die axiale Position des Sensor 1 wird durch das Trägerelement 5 bestimmt. Das außenliegende Ringelement 3a kann sich aus Lamellen zusammensetzen (nicht gezeigt). Die Lamellen sind umlaufend um den hohlzylinderförmigen Ring 3b des Dichtungsrings 3 angeordnet. Alle Lamellen bilden gemeinsam das (zusammengesetzte) außenliegende Ringelement 3a.

Im Ausführungsbeispiel ist das außenliegende Ringelement 3a durch auf einem außenliegenden Umfang angeordneten Teilabschnitt abgebildet, die durch Stege bzw. Rippen mit dem Dichtungsring verbunden sind. In dem Fall, dass Wasser zwischen den hohlzylindrischen Teil 3b und das außenliegende Ringelement 3a eindringt, kann es schnell durch die Aussparungen in dem außenliegenden Ringelement 3a, wie in Fig. 4 gezeigt, ausfließen.

### Bezugszeichenliste

- 1-: Sensor
- 2-: Bauteil
- 3-: Dichtungsring
- 3a-: Außenliegendes Ringelement
- 3b-: Hohlzylindrischer Ring
- 4-: Stege
- 5-: Trägerelement
- 6-: Stirnfläche des Sensors
- 7-: Außenseite des Bauteils
- 8-: Innenseite des Bauteils

## Patentansprüche

1. Anordnung an einem Bauteil (2) eines Kraftfahrzeuges, bestehend aus einem Sensor (1) mit einer im Wesentlichen ebenen Stirnfläche (6), einem den Sensor (1) um schließenden Dichtungsring (3) und einem Trägerelement (5) zur Abstandshaltung des Sensors (1) in axialer Richtung relativ zum Bauteil (2), wobei der Sensor (1) mit dem Dichtungsring (3) sich derart in eine Aussparung des Bauteils (2) erstreckt, dass die Stirnfläche (6) des Sensors (1) und eine Außenseite (7) des Bauteils (2) im Wesentlichen eine Ebene bildet,
**dadurch gekennzeichnet,**
**dass** der Dichtungsring (3) zusätzlich ein in radialer Richtung außenliegendes Ringelement (3a) mit mindestens zwei über dem Umfang verteilten Aussparungen aufweist, wobei das Ringelement (3a) derart ausgebildet ist, dass über die Aussparungen eindringendes Wasser ablaufen kann, wobei die Stirnseite des außenliegenden Ringelementes (3a) an der Innenseite (8) des Bauteils (2) anliegt, wobei das außenliegende Ringelement (3a) über Stege (4) an seiner Innenseite mit dem Dichtungsring (3) verbunden ist.

2. Anordnung nach Anspruch 1
**dadurch gekennzeichnet,**
**dass** der Sensor (1) ein Ultraschallsensor ist.

3. Anordnung nach Anspruch 1 oder 2
**dadurch gekennzeichnet,**
**dass** der Dichtungsring (3) zusätzlich als Entkopplungsring zur Verhinderung der Übertragung von Schwingungen ausgebildet ist.

4. Anordnung nach einem der Ansprüche 1 bis 3
**dadurch gekennzeichnet,**
**dass** der Dichtungsring (3) und/oder das Ringelement (3a) aus einem flexiblen Material, vorzugsweise einem Polymer, bevorzugt einem Silikon ausgebildet ist.

5. Anordnung nach einem der Ansprüche 1 bis 4
**dadurch gekennzeichnet,**
**dass** das Bauteil (2) ein außenliegendes Bauteil des Fahrzeuges, insbesondere ein Stoßfänger des Fahrzeuges ist.

## Claims

1. Arrangement on a component (2) of a motor vehicle, consisting of a sensor (1) having a substantially planar end face (6), a sealing ring (3) surrounding the sensor (1) and a carrier element (5) for keeping the sensor (1) at a distance relative to the component (2) in the axial direction, wherein the sensor (1) with the sealing ring (3) extends into a recess in the component (2) such that the end face (6) of the sensor (1) and an outer side (7) of the component (2) essentially form a plane,
**characterized in that** the sealing ring (3) additionally has a ring element (3a) lying externally in the radial direction with at least two recesses distributed over the circumference, wherein the ring element (3a) is designed such that water penetrating can drain away via the recesses, wherein the end face of the external ring element (3a) rests against the inner side (8) of the component (2), wherein the external ring element (3a) is connected to the sealing ring (3) via webs (4) on its inner side.

2. Arrangement according to Claim 1, **characterized in that** the sensor (1) is an ultrasonic sensor.

3. Arrangement according to Claims 1 or 2, **characterized in that** the sealing ring (3) is additionally designed as a decoupling ring for preventing the transmission of vibrations.

4. Arrangement according to any one of Claims 1 to 3, **characterized in that** the sealing ring (3) and/or the ring element (3a) are formed from a flexible material, preferably a polymer, preferably a silicone.

5. Arrangement according to any one of Claims 1 to 4, **characterized in that** the component (2) is an external component of the vehicle, in particular a bumper of the vehicle.

## Revendications

1. Ensemble sur un composant (2) d'un véhicule automobile, composé d'un capteur (1) comprenant une surface frontale (6) essentiellement plane, une bague d'étanchéité (3) entourant le capteur (1) et un élément de support (5) pour un espacement du capteur (1) dans une direction axiale par rapport au composant (2), le capteur (1) avec la bague d'étanchéité (3) s'étendant de telle façon dans une cavité du composant (2) que la surface frontale (6) du capteur (1) et une face extérieure (7) du composant (2) forment essentiellement un plan,
**caractérisé en ce que** la bague d'étanchéité (3) présente en outre un élément annulaire (3a) situé à l'extérieur dans une direction radiale comprenant au moins deux cavités distribuées sur la circonférence, l'élément annulaire (3a) étant formé de telle façon que de l'eau pénétrant à travers les cavités peut s'écouler, la face frontale de l'élément annulaire (3a) situé à l'extérieur étant en contact avec la face intérieure (8) du composant (2), l'élément annulaire (3a) situé à l'extérieur étant connecté à la bague d'étanchéité (3) à travers des traverses (4) sur sa face intérieure.

2. Ensemble selon la revendication 1, **caractérisé en ce que** le capteur (1) est un capteur à ultrasons.

3. Ensemble selon la revendication 1 ou 2, **caractérisé en ce que** la bague d'étanchéité (3) est formée en outre comme un anneau de découplage pour prévenir la transmission de vibrations.

4. Ensemble selon l'une quelconque des revendications 1 à 3, **caractérisé en ce que** la bague d'étanchéité (3) et/ou l'élément annulaire (3a) sont formés à partir d'un matériau flexible, de préférence un polymère, préférentiellement un silicone.

5. Ensemble selon l'une quelconque des revendications 1 à 4, **caractérisé en ce que** le composant (2) est un composant du véhicule situé à l'extérieur, en particulier un pare-chocs du véhicule.
